(19) Europäisches Patentamt
European Patent Office
Office européen des brevets

(11) Publication number: 0 078 555
B1

(12) EUROPEAN PATENT SPECIFICATION

(45) Date of publication of patent specification: 30.07.86

(21) Application number: 82201183.9

(22) Date of filing: 22.09.82

(51) Int. Cl.[4]: A 01 N 47/36, A 01 N 47/30 // (A01N47/36, 47:30),(A01N47/30, 39:04),(A01N47/30, 39:02),(A01N47/30, 33:22)

# (54) Herbicidal composition and method of combating undesired plant growth.

(30) Priority: 08.10.81 GB 8130400
15.10.81 GB 8131181
20.10.81 GB 8131592
16.02.82 GB 8204457
29.04.82 GB 8212536

(43) Date of publication of application:
11.05.83 Bulletin 83/19

(45) Publication of the grant of the patent:
30.07.86 Bulletin 86/31

(84) Designated Contracting States:
BE DE FR GB IT NL SE

(56) References cited:
EP-A-0 008 506
EP-A-0 009 716
FR-A-2 399 207
GB-A-1 453 772
GB-A-2 017 495
GB-A-2 037 585
GB-A-2 064 537

The file contains technical information submitted after the application was filed and not included in this specification

(73) Proprietor: SHELL INTERNATIONALE RESEARCH MAATSCHAPPIJ B.V.
Carel van Bylandtlaan 30
NL-2596 HR Den Haag (NL)

(72) Inventor: Raven, Clive Alan
Sheralee Wrens Road
Tunstall Sittingbourne Kent (GB)
Inventor: Loftus, Lynn
101 Station Road
Rainham Kent (GB)
Inventor: Swainson, Gillian
Amberwood The Valance
Lynsted, Nr. Sittingbourne Kent (GB)

(74) Representative: Hunter, Keith Roger Ian et al
4 York Road
London SE1 7NA (GB)

(56) References cited:
RESEARCH DISCLOSURE, no. 209, September 1981, Disclosure 20901, pages 338-340, Havant (GB); "Herbicide compositions"

Proceedings of 1976 British Crop Protection Conference - Weeds, pages 111-118

EP 0 078 555 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to herbicidal compositions and method of combating undesired plant growth.

GB—A—2,064,537 discloses that the compound 3-(3-methyl-4-isopropylphenyl)-1,1-dimethylurea is effective in the control of weeds. Further, from GB—A—1,453,772 herbicidal compositions are known comprising e.g. 3-(4-isopropylphenyl)-1,1-dimethylurea and another herbicidal compound, viz. 2-(4-chloro-2-methylphenoxy)propionic acid or a salt or an ester thereof. FR—A—2,399,207 teaches that to the latter compositions also 2-sec. or tert.-butyl-4,6-dinitrophenol can be added.

It has now been found that mixtures of 3-(3-methyl-4-isopropyphenyl)-1,1-dimethylurea with certain herbicides amongst which some of those disclosed in GB—A—1,453,772 and FR—A—2,399,207, exhibit an unexpected synergistic effect.

The invention therefore provides a herbicidal composition which comprises 3-(3-methyl-4-isopropyl phenyl)-1,1-dimethylurea (hereinafter referred to as compound A), together with at least one compound selected from:

(i) a compound which has the general formula I:—

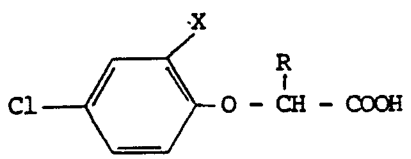

(I)

or a salt or alkyl ester containing up to 10 carbon atoms in the alkyl moiety, in which X represents a chlorine atom or a methyl group and R represents a hydrogen atom or a methyl group;

(ii) 1-benzothiazol-2-yl-1,3-dimethylurea; and

(iii) a compound which has the general formula II:—

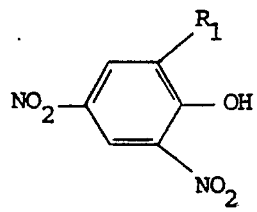

(II)

or a salt or an ester thereof with an alkanolic acid, in which $R_1$ represents a secondary or tertiary butyl group.

The compositions according to the invention may contain two or more compounds within one of the groups (i) and (iii) and/or two or more compounds from different groups (i), (ii) and (iii). Preferably however the compositions contain components selected from one only of groups (i), (ii) and (iii).

The invention further provides a method of combating undesired plant growth at a locus, which comprises applying to the locus compound A and at least one compound selected from (i) to (iii) above.

The compounds of group (i) include (2-(4-chloro-2-methylphenoxy)propanoic acid 2-(2,4-dichlorophenoxy)propanoic acid, 4-chloro-2-methylphenoxyacetic acid, 2,4-dichlorophenoxy-acetic acid and salts and esters thereof.

A compound of group (i) may be the free acid of formula I, or it may be a salt or an ester thereof. Suitable salts include alkali metal salts, especially the sodium or potassium salt, alkaline earth metal salts, for example the magnesium salts, and amine salts. Suitable amine salts include for example those of amines having up to three organic groups attached to the nitrogen, the organic groups being, for example, alkyl groups having up to 10 carbon atoms and being optionally substituted by, for example, hydroxy groups or halogen atoms. Suitable esters are for example alkyl esters having up to 10 carbon atoms in the alkyl moiety, for example the various isomeric octyl esters. Preferably, a compound of group (i) is the free acid or a potassium salt.

A compound of group (i) has an asymmetric carbon atom whenever R is other than a hydrogen atom and can therefore exist in two optically active forms. The invention should be understood to include the use of either isomer or any mixture thereof.

Typical compounds of group (iii) include 2-tert-butyl-4,6-dinitrophenol, 2-sec-butyl-4,6-dinitrophenol and salts and esters thereof.

A compound of group (iii) may be the free phenol of formula II or it may be a salt or an ester thereof with an alkanolic acid. Suitable salts include alkali metal salts, especially the sodium or potassium salts, alkaline earth metal salts, for example the magnesium salt, the ammonium salt and amine salts.

Preferably a compound of group (iii) is the free alcohol or the acetate thereof.

The weight ratio of compound A to the compound selected from (i) to (iii) may vary widely depending on the intended application. Preferably said ratio is in the range of from 1:50 to 50:1, preferably 1:20 to

20:1, especially 5:1 to 1:5. Suitably the dosage of each compound applied is in the range of from 0.05 to 5 kg/ha.

Especially preferred dosages to certain binary mixtures are for example, from 0.3 to 3 kg/ha of compound A together with 0.1 to 3.5 kg/ha of a compound of group (i); 0.3 to 3 kg/ha of compound A together with 0.3 to 4 kg/ha of compound (ii); and 0.25 to 3 kg/ha of compound A together with 0.25 to 3 kg/ha of a compound of group (iii).

The composition and method of the invention may be used for the control of weeds in a wide variety of crops, depending of course on the nature of the compound (i) to (iii). Typical crops include, for example, cotton, soyabean, plantation crops such as sugar can or vines, and, especially, cereals such as wheat, barley, maize or sorghum. Mixtures containing a compound of group (iii) may also be especially useful in leguminous crops such as peas and beans. A wide range of broad leaved and grassy weeds are controlled. Application may be pre-emergence or, preferably, post-emergence. For certain applications, especially when resistant weeds are present, it may be desirable also to apply a further herbicide. For example, if severe infestations of wild oat are present in cereal crops, it may be advantageous to apply along with compound A and one or more compounds (i) to (iii), one of the N,N-disubstituted alanine derivatives which are specialised narrow spectrum herbicides and described in U.K. Patent No. 1,164,160, for example the ethyl ester of N-benzoyl-N-(3,4-dichlorophenyl)-2-aminopropionic acid, or the racemic mixture of laevo-rotatory isomer of the methyl or isopropyl ester of N-benzoyl-N-(3-chloro-4-fluorophenyl)-2-aminopropionic acid or a broad-spectrum herbicide such as a triazine, for example cyanazine, atrazine or simazine. Further suitable compounds which may be present as a third component include metolachlor, chlortoluron, isoproturon and dichlofopmethyl.

A composition according to the invention preferably also comprise one or more carriers. A carrier is any material with which the active ingredients are formulated to facilitate application to the locus to be treated, or to facilitate storage, transport or handling. A carrier may be a solid or a liquid, including a material which is normally gaseous but which has been compressed to form a liquid, and any of the carriers normally used in formulating herbicidal compositions may be used.

Suitable solid carriers include natural and synthetic clays and silicates, for example natural silicas such as diatomaceous earth; magnesium silicates, for example talcs; magnesium aluminium silicates, for example attapulgites and vermiculites; aluminium silicates, for example kaolinites, montmorillonites and micas; calcium carbonate; calcium sulphate; synthetic hydrated silicon oxides and synthetic calcium or aluminium silicates; elements, for example carbon and suphur; natural and synthetic resins, for example coumarone resins, polyvinyl cloride, and styrene polymers and copolymers; solid polychlorophenols; bitumen; waxes, for example beeswax, paraffin wax, and chlorinated mineral waxes; and solid fertilisers, for example superphosphates.

Suitable liquid carriers include water; alcohols, for example isopropanol and glycols; for example acetone, methyl ethyl ketone, methyl isobutyl ketone and cyclohexanone; ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Agricultural compositions are often formulated and transported in a concentrated form which is subsequently diluted by the user before application. The presence of small amounts of a carrier which is a surface-active agent facilitates this proces of dilution.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example *p*-octylphenol or *p*-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions of the invention may for example be formulated as wettable powders, dusts, granules, solutions, emulsifiable concentrates, emulsions, suspension concentrates and aerosols. Wettable powders usually contain 25, 50 and 75% w of active ingredient and usually contain, in addition to solid inert carrier, 3—10% w of a dispersing agent and, where necessary, 0—10% w of stabiliser(s) and/or other additives such as penetrants or stickers. Dusts are usually formulated as a dust concentrate having a similar compositions to that of a wettable powder but without a dispersant, and are diluted in the field with further solid carrier to give a composition usually containing ½—10% w of active ingredient. Granules are usually prepared to have a size between 10 and 100 BS mesh (1.676—0.152 mm), and may be manufactured by agglomeration or impregnation techniques. Generally, granules will contain ½-25% w active ingredient and 0—10% w of additives such as stabilisers, slow release modifiers and binding agents. Emulsifiable concentrates usually contain, in addition to a solvent and, when necessary, co-solvnt, 10—15% w/v active

ingredient, 2—20% w/v emulsifiers and 0—20% w/v of other additives such as stabilisers, penetrants and corrosion inhibitors. Suspension concentrates are usually compounded so as to obtain a stable, non-sedimenting flowable product and usually contain 10—75% w active ingredient, 0.5—15% w of dispersing agents, 0.1—10% w of suspending agents such as protective colloids and thixotropic agents, 0—10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as antifreeze agents for water.

Aqueous dispersions and emulsions, for example compositions obtained by diluting a wettable powder or a concentrate according to the invention with water, also lie within the scope of the present invention. The said emulsions may be of the water-in-oil or of the oil-in-water type, and may have a thick 'mayonnaise'-like consistency.

The compositions of the invention may also contain other ingredients, for example, compounds possessing insecticidal or fungicidal properties.

The following Examples illustrate the invention.

General Procedure

The tests conducted were foliar spray tests, in which seedling plants were sprayed with a formulation containing the test compound. Various test plant species were used, including blackgrass, speedwell, black nightshade and wild oats.

The soil used in the tests was a prepared horticultural loam. Speedwell and wild oat seedlings had 0 or 1 true leaves, and blackgrass and black nightshade seedlings had 2 or 3 true leaves.

The formulations used in the tests were prepared by diluting with water, solutions of the test compound or mixture in acetone containing 0.4% by weight of an alkylphenol/ethylene oxide condensate available under the trade name TRITON X—155. The acetone solutions were diluted with an equal volume of water and the resulting formulations applied at 4 different dosage levels designed to produce a range of responses. Three replicate pots were used for each treatment. Untreated seedlings plants were used as controls.

As specified number of days after treatment, phytotoxicity compared with the untreated control, was assessed visually on a 0 to 9 scale, 0 indicating no effect and 9 indicating death.

The results were subjected to a standard probit analysis by computer to calculate the dosage of each compound or mixture, in Kg/ha, required to kill 50% of the test species. This dosage is referred to as the $GID_{50}$ dosage. If a mixture of herbicides A and B act together in an additive way, one would *expect* the $GID_{50}$ values for A and B in the mixture to be given by the equations (i) and (ii) below;

$$GID_{50} \text{ of B in mixture} = \frac{a}{\alpha + \frac{a}{b}} \qquad (i)$$

$$GID_{50} \text{ of A in mixture} = (GID_{50} \text{ of B in mixture}) \times \alpha \qquad (ii)$$

where $a$ = $GID_{50}$ of A used alone
$b$ = $GID_{50}$ of B used alone
$\alpha$ = weight ratio of compound A to compound B in mixture

If the measured $GID_{50}$ values are in fact less than the calculated values, the mixture is synergistic.

The results of the tests are given in the following Tables. The $GID_{50}$ values are actual, measured values in kg/ha, and calculated values are given in brackets after the measured values.

Example 1

This Example was carried out using the following compounds:

A: 3-(3-methyl-4-isopropylphenyl)-1,1-dimethylurea.

B: The mono-methylamine salt of 2-(2,4-dichlorophenoxy)propanoic acid, the commercial herbicide "Dichlorprop".

Results are given in Tables Ia and Ib, which show that this mixture was synergistic against Black Nightshade at only 5 days after treatment whereas with Speedwell synergism was observed at 9 days after treatment.

No synergism was observed against the Blackgrass.

TABLE I
(Example 3 — Assessments made after 5 days)

| Mixture Ratio A:B | Blackgrass $GID_{50}$ A | B |
|---|---|---|
| 1:0 | 0.062 (0.062) | 0 (0) |
| 4:1 | 0.061 (0.062) | 0.015 (0.016) |
| 2:1 | 0.076 (0.062) | 0.038 (0.031) |
| 1:1 | 0.094 (0.062) | 0.094 (0.062) |
| 1:2 | 0.083 (0.062) | 0.166 (0.124) |
| 0:1* | — — | — — |

| Mixture Ratio A:B | Speedwell $GID_{50}$ A | B |
|---|---|---|
| 1:0 | 0.20 (0..25) | 0 (0) |
| 16:1 | 0.28 (0.21) | 0.018 (0.013) |
| 8:1 | 0.18 (0.18) | 0.023 (0.022) |
| 4:1 | 0.14 (0.14) | 0.034 (0.035) |
| 2:1 | 0.091 (0.097) | 0.045 (0.49) |
| 0:1 | 0 (0) | 0.081 (0.080) |

| Mixture Ratio A:B | Black Nightshade $GID_{50}$ A | B |
|---|---|---|
| 1:0 | 0.17 (0.17) | 0 (0) |
| 1:8 | 0.004 (0.009) | 0.003 (0.073) |
| 1:16 | 0.004 (0.005) | 0.060 (0.075) |
| 1:32 | 0.002 (0.002) | 0.067 (0.076) |
| 1:64 | 0.001 (0.001) | 0.075 (0.076) |
| 0:1 | 0 (0) | 0.077 (0.077) |

* component B alone not active against blackgrass.

TABLE I
(Example 3 — Assessment made after 9 days)

| Mixture Ratio A:B | Blackgrass GID$_{50}$ A | B |
|---|---|---|
| 1:0 | 0.016 (0.016) | 0 (0) |
| 4:1 | 0.017 (0.016) | 0.004 (0.004) |
| 2:1 | 0.022 (0.016) | 0.011 (0.008) |
| 1:1 | 0.025 (0.016) | 0.025 (0.016) |
| 1:2 | 0.023 (0.016) | 0.046 (0.032) |
| 0.1 | — | — |

| Mixture Ratio A:B | Speedwell GID$_{50}$ A | B |
|---|---|---|
| 1:0 | 0.15 (0.15) | 0 (0) |
| 16:1 | 0.13 (0.13) | 0.008 (0.008) |
| 8:1 | 0.099 (0.11) | 0.012 (0.014) |
| 4:1 | 0.068 (0.086) | 0.017 (0.021) |
| 2:1 | 0.042 (0.060) | 0.021 (0.030) |
| 0:1 | 0 (0) | 0.050 (0.050) |

| Mixture Ratio A:B | Black Nightshade GID$_{50}$ A | B |
|---|---|---|
| 1:0 | 0.0052 (0.0052) | 0 (0) |
| 1:8 | 0.0024 (0.0042) | 0.019 (0.034) |
| 1:16 | 0.0026 (0.0037) | 0.042 (0.059) |
| 1:32 | 0.0018 (0.0029) | 0.057 (0.091) |
| 1:64 | 0.0011 (0.0020) | 0.070 (0.125) |
| 0:1 | 0 (0) | 0.20 (0.20) |

Example 2

This Example was carried out using the following compounds:

A: 3-(3-methyl-4-isopropylphenyl)-1,1-dimethylurea

B: The potassium salt of 2-(4-chloro-2-methylphenoxy)propanoic acid, the commercial herbicide "Mecoprop".

Results are given in Tables IIa and IIb, which show that this mixture is synergistic in its action against Blackgrass and Black Nightshade after only 5 days.

No synergism was observed against Speedwell.

TABLE IIa
(Example 4 — Assessments made after 5 days)

| Mixture Ratio A:B | Blackgrass $GID_{50}$ A | B |
|---|---|---|
| 1:0 | 0.084 (0.084) | 0 (0) |
| 4:1 | 0.060 (0.084) | 0.015 (0.021) |
| 2:1 | 0.049 (0.084) | 0.025 (0.042) |
| 1:1 | 0.049 (0.084) | 0.049 (0.084) |
| 1:2 | 0.044 (0.084) | 0.088 (0.168) |
| 0:1* | — | — |

| Mixture Ratio A:B | Speedwell $GID_{50}$ A | B |
|---|---|---|
| 1:0 | 0.110 (0.120) | 0 (0) |
| 16:1 | 0.090 (0.100) | 0.006 (0.006) |
| 8:1 | 0.100 (0.087) | 0.013 (0.011) |
| 4:1 | 0.072 (0.069) | 0.018 (0.017) |
| 2:1 | 0.050 (0.049) | 0.025 (0.024) |
| 0:1 | 0 (0) | 0.039 (0.041) |

| Mixture Ratio A:B | Black Nightshade A | B |
|---|---|---|
| 1:0 | 0.005 (0.005) | 0 (0) |
| 1:4 | 0.001 (0.003) | 0.004 (0.010) |
| 1:8 | 0.0009 (0.0020) | 0.007 (0.014) |
| 1:16 | 0.0002 (0.0010) | 0.004 (0.017) |
| 1:32 | 0.005 (0.0010) | 0.015 (0.019) |
| 0:1 | 0 (0) | 0.022 (0.022) |

* component B alone not active against blackgrass.

TABLE IIb
(Example 4 — Assessment made after 9 days)

| Mixture Ratio A:B | A | B |
|---|---|---|
| | **Blackgrass GID$_{50}$** | |
| 1:0 | 0.034 (0.034) | 0 (0) |
| 4:1 | 0.018 (0.034) | 0.005 (0.009) |
| 2:1 | 0.019 (0.034) | 0.010 (0.017) |
| 1:1 | 0.016 (0.034) | 0.016 (0.034) |
| 1:2 | 0.015 (0.034) | 0.030 (0.068) |
| 0:1 | — | — |
| | **Speedwell GID$_{50}$** | |
| 1:0 | 0.040 (0.040) | 0 (0) |
| 16:1 | 0.042 (0.037) | 0.003 (0.002) |
| 8:1 | 0.048 (0.034) | 0.006 (0.004) |
| 4:1 | 0.039 (0.030) | 0.010 (0.008) |
| 2:1 | 0.025 (0.024) | 0.013 (0.012) |
| 0:1 | 0 (0) | 0.031 (0.031) |
| | **Black Nightshade** | |
| 1:0 | 0.0016 (0.0018) | 0 (0) |
| 1:4 | 0.0023 (0.0017) | 0.0090 (0.0068) |
| 1:8 | 0.0018 (0.0016) | 0.014 (0.013) |
| 1:16 | 0.0008 (0.0013) | 0.013 (0.022) |
| 1:32 | 0.0012 (0.0010) | 0.039 (0.034) |
| 0:1 | 0 (0) | 0.076 (0.076) |

Example 3

The following compounds are used in this Example:

A: 3-(3-methyl-4-isopropylphenyl)-1,1-dimethylurea
B: (2,4-dichlorophenoxy)acetic acid, the commercial herbicide "2,4-D".
Results, assessed after 6 days, are given in Table III Synergism can be clearly seen.

TABLE III

Blackgrass $GID_{50}$

| Mixture ratio A:B | A | B |
|---|---|---|
| 1:0 | 0.086 (0.086) | 0 (0) |
| 4:1 | 0.051 (0.086) | 0.013 (0.022) |
| 2:1 | 0.094 (0.086) | 0.047 (0.043) |
| 1:1 | 0.043 (0.086) | 0.043 (0.086) |
| 1:2 | 0.051 (0.086) | 0.10 (0.17) |
| 0:1 | — — | — — |

Speedwell $GID_{50}$

| Mixture ratio A:B | A | B |
|---|---|---|
| 1:0 | 0.94 (0.94) | 0 (0) |
| 16:1 | 0.13 (0.61) | 0.008 (0.038) |
| 8:1 | 0.18 (0.46) | 0.022 (0.057) |
| 4:1 | 0.17 (0.30) | 0.043 (0.075) |
| 2:1 | 0.074 (0.18) | 0.037 (0.089) |
| 0:1 | 0 (0) | 0.11 (0.11) |

Black Nightshade $GID_{50}$

| Mixture ratio A:B | A | B |
|---|---|---|
| 1:0 | 0.004 (0.004) | 0 (0) |
| 1:1 | 0.0026 (0.004) | 0.0026 (0.004) |
| 1:2 | 0.0019 (0.004) | 0.0039 (0.007) |
| 1:4 | 0.0019 (0.003) | 0.0077 (0.013) |
| 1:8 | 0.0010 (0.003) | 0.0083 (0.022) |
| 0:1 | 0 (0) | 0.068 (0.068) |

Example 4

The following compounds were used in this Example:

A: 3-(3-methyl-4-isopropylphenyl)-1,1-dimethylurea
B: (4-chloro-2-methylphenoxy) acetic acid, the commercial herbicide "MCPA".
Results, assessed after 12 days, are given in Table IV. Synergism can be clearly seen.

TABLE IV

| | Blackgrass $GID_{50}$ | |
|---|---|---|
| Mixture ratio A:B | A | B |
| 1:0 | 0.065 (0.065) | 0 (0) |
| 4:1 | 0.054 (0.065) | 0.014 (0.016) |
| 2:1 | 0.052 (0.065) | 0.026 (0.033) |
| 1:1 | 0.046 (0.065) | 0.046 (0.065) |
| 1:2 | 0.048 (0.065) | 0.098 (0.13) |
| 0:1 | — — | — — |

| | Black Nightingshade $GID_{50}$ | |
|---|---|---|
| Mixture ratio A:B | A | B |
| 1:0 | 0.0053 (0.0053) | 0 (0) |
| 1:1 | 0.0041 (0.005) | 0.0041 (0.005) |
| 1:2 | 0.0033 (0.005) | 0.0066 (0.009) |
| 1:4 | 0.0028 (0.004) | 0.011 (0.016) |
| 1:8 | 0.0020 (0.003) | 0.016 (0.026) |
| 0:1 | 0 (0) | 0.069 (0.069) |

TABLE 5

In this Example, the following compounds were used:

A: 3-(3-methyl-4-isopropylphenyl)-1,1-dimethylurea
B: 1-Benzothiazol-2-yl-1,3-dimethylurea the commercial herbicide methabenzthiazuron.

The results, assessed after 12 days, are given in Table V, and show that the mixtures tested showed significant synergism against both Speedwell and Black Nightingshade.

TABLE V

| | Speedwell $GID_{50}$ | |
|---|---|---|
| Mixture ratio A:B | A | B |
| 1:0 | 0.62 (0.62 (0.62) | 0 :(0) |
| 32:1 | 0.34 (0.42) | 0.010 (0.013) |
| 16:1 | 0.25 (0.32) | 0.016 (0.020) |
| 8:1 | 0.18 (0.22) | 0.022 (0.027) |
| 4:1 | 0.084 (0.13) | 0.021 (0.033) |
| 0:1 | 0 (0) | 0.042 (0.042) |

| | Black Nighshade $GID_{50}$ | |
|---|---|---|
| Mixture ratio A:B | A | B |
| 1:0 | 0.014 (0.014) | 0 (0) |
| 4:1 | 0.018 (0.013) | 0.004 (0.003) |
| 2:1 | 0.014 (0.013) | 0.007 (0.006) |
| 1:1 | 0.005 (0.012) | 0.005 (0.012) |
| 1:2 | 0.003 (0.010) | 0.006 (0.019) |
| 0:1 | 0 (0) | 0.059 (0.059) |

Example 6

In this Example, the following compounds were used:

A: 3-(3-methyl-4-isopropylphenyl)-1,1-dimethylurea

B: 2-tert-butyl-4,6-dinitrophenol the commercial herbicide Dinoterb.

The results, assessed after 6 days, are given in Table VI, and show that the mixtures tested showed significant synergism.

TABLE VI

| Mixture Ratio A:B | Speedwell $GID_{50}$ A | B |
|---|---|---|
| 1:0 | 3.55 (3.55) | 0 (0) |
| 16:1 | 0.99 (1.10) | 0.062 (0.069) |
| 8:1 | 0.52 (0.65) | 0.065 (0.082) |
| 4:1 | 0.27 (0.36) | 0.066 (0.090) |
| 2:1 | 0.13 (0.19) | 0.067 (0.095) |
| 0:1 | 0 (0) | 0.10 (0.10) |

| Mixture Ratio A:B | Black Nightshade $GID_{50}$ A | B |
|---|---|---|
| 1:0 | 0.047 (0.047) | 0 (0) |
| 4:1 | 0.012 (0.027) | 0.003 (0.007) |
| 2:1 | 0.008 (0.019) | 0.004 (0.010) |
| 1:1 | 0.004 (0.012) | 0.004 (0.012) |
| 1:2 | 0.003 (0.007) | 0.005 (0.014) |
| 0:1 | 0 (0) | 0.016 (0.016) |

| Mixture Ratio A:B | Wild Oats $GID_{50}$ A | B |
|---|---|---|
| 1:0 | 3.36 (3.36) | 0 (0) |
| 2:1 | 1.24 (2.18) | 0.62 (1.09) |
| 1:1 | 1.48 (1.61) | 1.48 (1.61) |
| 1:2 | 0.86 (1.06) | 1.73 (2.12) |
| 1:4 | 0.58 (063) | 2.31 (2.51) |
| 0:1 | 0 (0) | 3.09 (3.09) |

**Claims**

1. A herbicidal composition which comprises 3-(3-methyl-4-isopropyl phenyl)-1,1-dimethylurea (hereinafter referred to as compound A), together with at least one compound selected from:

(i) a compound which has the general formula I:—

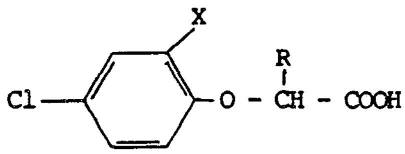

(I)

or a salt or alkyl ester containing up to 10 carbon atoms in the alky moiety, in which X represents a chlorine atom or a methyl group and R represents a hydrogen atom or a methyl group;

(ii) 1-benzothiazol-2-yl-1,3-dimethylurea; and

(iii) a compound which has the general formula II:—

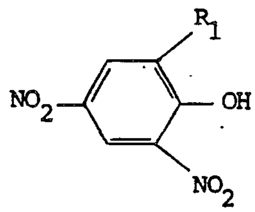

(II)

or a salt or an ester thereof with an alkanoic acid, in which $R_1$ represents a secondary or tertiary butyl group.

2. A composition as claimed in claim 1, in which the compound of group (i) is the free acid of formula I or is an alkali metal salt, alkaline earth metal salt, amine salt, or an octyl ester thereof.

3. A composition as claimed in claim 1 or 2, in which a compound of group (iii) is the free phenol of formula II or the acetate thereof.

4. A composition as claimed in any one of the preceding claims which also comprises one or more carriers.

5. A method of combating undesired plant growth at a locus, which comprises applying to the locus compound A together with at least one compound selected from groups (i) to (iii) as defined in any one of claims 1 to 3.

6. A method as claimed in claim 5, in which the compounds are applied in the form of a composition as claimed in any one of claims 1 to 4.

7. A method as claimed in either claim 5 or claim 6 in which the locus treated is a crop area bearing plants or seeds of cereals.

**Patentansprüche**

1. Eine herbizide Zusammensetzung, die 3-(3-Methyl-4-isopropylphenyl)-1,1-dimethylharnstoff (hiernach als "Komponente A" bezeichnet) zusammen mit mindestens einer Verbindung, ausgewählt aus

(i) einer Verbindung, die die allgemeine Formel I hat

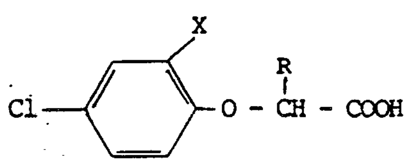

(I)

oder einem Salz oder Alkylester, der bis zu 10 Kohlenstoffatome im Alkylrest enthält, in der X ein Chloratom oder eine Methylgruppe darstellt und R ein Wasserstoffatom oder eine Methylgruppe darstellt;

(ii) 1-Benzothiazol-2-yl-1,3-dimethylharnstoff; und

(iii) einer Verbindung, die die allgemeine Formel II hat

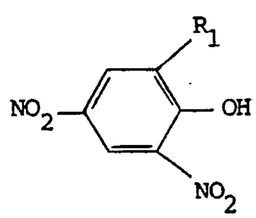

(II)

oder steren Salz odeer Ester mit einer Alkansäure, in der $R_1$ eine sekundäre oder tertiäre Butylgruppe darstellt, enthält.

2. Eine Zusammensetzung wie in Anspruch 1 beansprucht, in der die Verbindung der Gruppe (i) die freie Säure der Formel I oder deren Alkalimetallsalz, Erdalkalimetallsalz, Aminsalz oder deren Octylester ist.

3. Eine Zusammensetzung wie in Anspruch 1 oder 2 beansprucht, in der eine Verbindung der Gruppe (iii) das freie Phenol der Formel II oder deren Acetat ist.

4. Eine Zusammensetzung wie in irgendeinem der vorstehenden Ansprüche beansprucht, die außberdem ein oder mehrere Trägermaterialien enthält.

5. Ein Verfahren zur Bekämpfung unwerwünschten Pflanzenwachstums an einer Stelle, die Maßnahme einer Verwendung der Komponente A zusammen mit mindestens einer Verbindung, ausgewählt aus den Gruppen (i) bis (iii), wie in irgendeinem der Ansprüche 1 bis 3 definiert, an der Stelle umfassend.

6. Ein Verfahren wie in Anspruche 5 beansprucht, wobei die Verbindungen in Form einer Zusammensetzung wie in irgendeinem der Ansprüche 1 bis 4 beansprucht, angewendet werden.

7. Ein Verfahren wie entweder in Anspruch 5 oder in Anspruch 6 beansprucht, wobei die behandelte Stelle eine Ertragsfläche ist, die Pflanzen oder Getreidesamen trägt.

**Revendications**

1. Une composition herbicide qui comprend de la 3-(3-méthyl-4-isopropyl phényl)-1,1-diméthylurée (appelée ici composé A) en même temps qu'au moins un composé choisi parmi:

(1) un composé qui a la formule générale I:

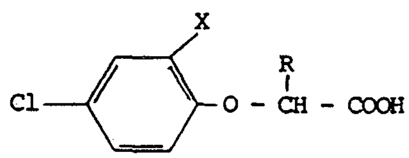

(I)

ou un sel ou un ester alcoylique contenant jusqu'à 10 atomes de carbone dans la portion alcoyle, où X représente un atome de chlore ou un groupe méthyle et R représente un atome d'hydrogène ou un groupe méthyle;

(2) la 1-benzothiazol-2-yl-1,3-diméthylée; et

(3) un composé qui a la formule générale II:

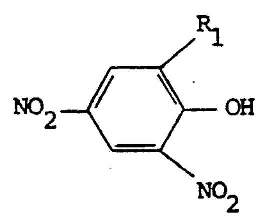

(II)

ou un sel ou un ester de ce composé avec un acide alcanoïque, où $R_1$ repésente un groupe butyle secondaire ou tertiaire .

2. Une composition selon la revendication 1, dans laquelle le composé du groupe (1) est l'acide libre de formule I ou est un sel de métal alcalin, un sel de métal alcalino-terreux, un sel d'amine ou un ester octylique de cet acide.

3. Une composition selon la revendication 1 ou 2, dans laquelle un composé du groupe (3) est le phénol libre de formule II ou son acétate.

4. Une composition selon l'une quelconque des revendications précédentes qui comprend aussi un ou plusieurs véhicules.

5. Un procédé pour combattre la croissance indésirée de plantes en un lieu, qui comprend l'application à ce lieu du composé A en même temps qu d'au moins un composé choisi dans les groupes (1) à (3) comme défini dans l'une quelconque des revendications 1 à 3.

6. Un procédé selon la revendication 5, dans lequel les compsés sont appliqués sous la forme d'une composition selon l'une quelconque des revendications 1 à 4.

7. Un procédé selon la revendication 5 ou la revendication 6, dans lequel le lieu traitè est un zone cultivée portant des plantes ou des semences de céréales.